(19) Europäisches Patentamt
European Patent Office
Office européen des brevets

(11) **EP 1 860 018 A2**

(12) **EUROPEAN PATENT APPLICATION**

(43) Date of publication:
**28.11.2007 Bulletin 2007/48**

(51) Int Cl.:
**B62D 5/04** (2006.01)   **B62D 6/00** (2006.01)

(21) Application number: **07010158.9**

(22) Date of filing: **22.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.05.2006 JP 2006144859**

(71) Applicant: **NSK Ltd.**
**Shinagawa-ku**
**Tokyo (JP)**

(72) Inventors:
• **Endo, Shuji**
**Maebashi-shi**
**Gunma 371-8527 (JP)**

• **Aoki, Yuho**
**Maebashi-shi**
**Gunma 371-8527 (JP)**
• **Hara, Takeshi**
**Maebashi-shi**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Control apparatus of electric power steering apparatus**

(57)     In a control apparatus of an electric power steering apparatus constructed so as to calculate a current command value (Iref) of a motor for applying steering assist force to a steering mechanism based on steering torque (T) and a vehicle speed (V) and drive and control the motor based on the current command value (Iref), there are provided an SAT detection part (52,51) for detecting or estimating an SAT detection value, a standard SAT calculation part (52) for calculating a standard SAT value based on a steering angle (θ) and the vehicle speed (V), and a correction part (50) for calculating a correction amount based on the SAT detection value and the standard SAT value and correcting the current command value.

*FIG. 1*

EP 1 860 018 A2

**Description**

BACKGROUND OF THE INVENTION

1. Field of the Invention

The present invention relates to a control apparatus of an electric power steering apparatus in which a steering apparatus of a vehicle is constructed so as to apply a steering assist (assist) by a motor, and particularly to a control apparatus of an electric power steering apparatus for stabilizing vehicle behavior by performing assist control so that actual SAT follows a standard self-aligning torque (SAT) value obtained by calculation.

2. Description of Related Art

An electric power steering apparatus in which an assist loadbias (assist) of a steering apparatus of a vehicle is applied by rotational force of a motor is constructed so that an assist load bias of driving force of the motor is applied to a rack shaft or a steering shaft by a transfer mechanism such as gears or a belt through a reducer. Such a conventional electric power steering apparatus performs feedback control of a motor current in order to accurately generate assist torque (steering assist force) . The feedback control is control of adjusting a motor applied voltage so that a difference between a current command value and a motor current detection value becomes small, and the motor applied voltage is generally adjusted by adjusting a duty ratio of PWM (pulse width modulation) control.

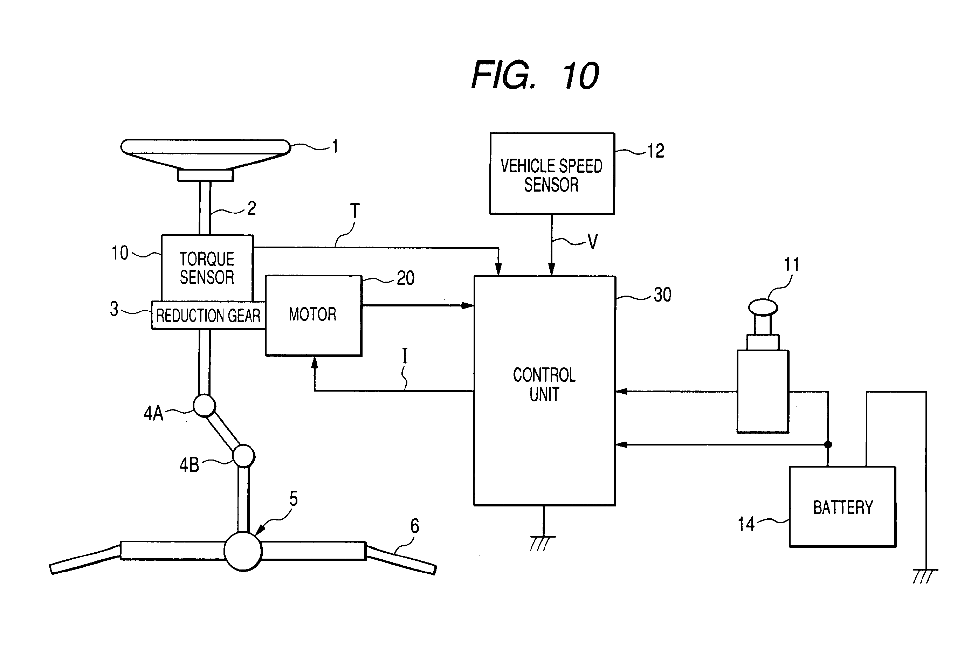

Referring here to a general configuration of an electric power steering apparatus by being shown in Fig. 10, a column shaft 2 of a steering wheel 1 is joined to tie rods 6 of steering wheels through a reduction gear 3, universal joints 4A and 4B, and a pinion rack mechanism 5. The column shaft 2 is provided with a torque sensor 10 for detecting steering torque of the steering wheel 1, and a motor 20 for assisting steering force of the steering wheel 1 is joined to the column shaft 2 through the reduction gear 3. Electric power is supplied from a battery 14 to a control unit 30 for controlling the power steering apparatus and also, an ignition key signal is inputted from an ignition key 11, and the control unit 30 calculates a steering assist command value I of an assist command using an assist map etc. based on steering torque T detected by the torque sensor 10 and a vehicle speed V detected by a vehicle speed sensor 12, and controls a current supplied to the motor 20 based on the calculated steering assist command value I.

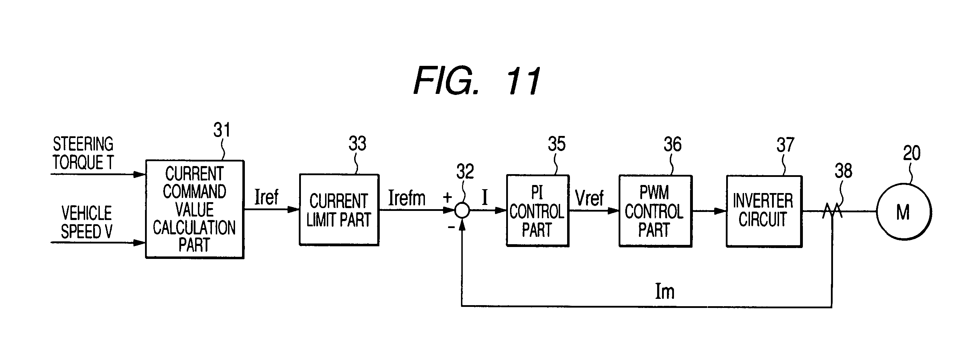

The control unit 30 is mainly constructed of a CPU (including an MPU or an MCU) , and a general function executed by a program inside its CPU is shown in Fig. 11.

Referring to an action and a function of the control unit 30 with reference to Fig. 11, steering torque T detected by the torque sensor 10 and a vehicle speed V detected by the vehicle speed sensor 12 are inputted to a current command value calculation part 31 for calculating a current command value Iref. The current command value calculation part 31 decides the current command value Iref which is a control target value of a current supplied to the motor 20 using an assist map etc. based on the steering torque T and the vehicle speed V inputted. The current command value Iref is inputted to a current limit part 33, and a current command value Irefm in which the maximum current is limited is inputted to a subtraction part 32, and a deviation I (Irefm-Im) from a motor command value Im fed back is calculated, and its deviation I is inputted to a PI control part 35 for improving characteristics of a steering action. Asteering assist command value Vref inwhich the characteristics are improved by the PI control part 35 is inputted to a PWM control part 36 and further, PWM driving of the motor 20 is performed through an inverter circuit 37 acting as a driving part. The command value Im of the motor 20 is detected by a motor current detector 38 and is fed back to the subtraction part 32. In addition, the current limit part 33 is not necessarily required.

In order to stabilize vehicle behavior in the general electric power steering apparatus as described above, a control apparatus of an electric power steering apparatus constructed so that by generating a convergence signal for converging a yaw rate based on a relation between a yaw rate of a vehicle and a steering angle of an electric power steering apparatus, braking is applied to the yaw rate of the vehicle and convergence can be performed surely without discomforting a driver has been proposed as shown in Japanese Patent Unexamined Publication JP-A-2000-95132.

Also, a steering control apparatus for vehicle in which a target yaw rate is calculated using a yaw rate standard model from a steering angle and a vehicle speed detected and a target locus is calculated from the calculated target yaw rate and steering torque is assisted according to a deviation from an actual locus calculated from a detected yaw rate has been proposed in Japanese Patent Unexamined Publication JP-A-2000-118423.

The apparatus described in JP-A-2000-95132 uses conventional yaw rate damping control and uses control of converging a yaw rate by braking. As a result of that, there is a problem that a function of increasing a yaw rate cannot be implemented when the yaw rate decreases due to disturbance etc.

Also, the apparatus described in JP-A-2000-118423 uses a control method called DYC (Direct Yaw moment Control), and actual vehicle movement is controlled so as to follow a standard model of vehicle movement, and the important point as to what standard model is best is ambiguous. This is because in evaluation of a standard model as

EP 1 860 018 A2

to what a vehicle (yaw rate) should respond to a steering input (steering angle), it is evaluated and defined what response to a driver is desirable and it is difficult to quantitatively define the evaluation.

SUMMARY OF THE INVENTION

The invention has been implemented in view of the circumstances as described above, and an obj ect of the invention is to provide a control apparatus of an electric power steering apparatus for stabilizing vehicle behavior by performing assist control so that actual SAT follows standard SAT by focusing attention on SAT of a vehicle.

According to a first aspect of the invention, there is provided a control apparatus of an electric power steering apparatus, which calculates a current command value of a motor for applying steering assist force to a steeringmechanismbased on steering torque and a vehicle speed, and controls the motor based on the current command value, comprising:

> an SAT detection part that detects or estimates a Self aligning Torque (SAT) detection value;
> a standard SAT calculation part that calculates a standard SAT value based on a steering angle and the vehicle speed; and
> a correction part that calculates a correction amount based on the SAT detection value and the standard SAT value and corrects the current command value.

According to a second aspect of the invention, as set forth in the first aspect of the invention, it is preferable that the SAT detection part estimates the SAT detection value based on the steering torque, the current command value, a motor rotational speed and a rotational angular speed.

According to a third aspect of the invention, as set forth in the first aspect of the invention, it is preferable that the standard SAT calculation part has a model of an SAT change rate with respect to a steering angle.

According to a fourth aspect of the invention, as set forth in the first aspect of the invention, it is preferable that a deviation of the SAT detection value from the standard SAT value is calculated and the deviation is multiplied by a gain in response to the steering torque so as to calculate the correction amount.

According to a fifth aspect of the invention, there is provided a control apparatus of an electric power steering apparatus which calculates a current command value of a motor for applying steering assist force to a steering mechanism based on steering torque and a vehicle speed, and controls the motor based on the current command value, comprising:

> an SAT detection part that detects or estimates an SAT detection value;
> a standard SAT change rate detection part that detects a standard SAT change rate based on the SAT detection value and the vehicle speed; and
> a correction part that calculates a correction amount based on a differential value of the SAT detection value and the standard SAT change rate and correcting the current command value.

According to a sixth aspect of the invention, as set forth in the fifth aspect of the invention, it is preferable that the SAT detection part estimates the SAT detection value based on a steering angle and the vehicle speed.

According to a seventh aspect of the invention, as set forth in the fifth aspect of the invention, it is preferable that the standard SAT calculation part has a model of an SAT change rate with respect to a steering angle.

According to an eighth aspect of the invention, as set forth in the fifth aspect of the invention, it is preferable that a deviation of the differential value from the standard SAT change rate is calculated and the deviation is multiplied by a gain in response to the steering torque so as to calculates the correction amount.

According to a ninth aspect of the invention, as set forth in the fifth aspect of the invention, it is preferable that the correction part is responsive to the vehicle speed and the steering torque.

With respect to the conventional art of detecting a yaw rate of a vehicle and generating assist torque based on a deviation from a standard yaw rate, a control apparatus of an electric power steering apparatus according to the invention performs control so that actual SAT follows a target value, so that high responsiveness can be obtained.

Also, according to the invention, SAT can directly deal with the influence of road surface conditions, so that stabilizing control of vehicle behavior in which road surface information is reflected canbe implemented. A correction value added to a current command value directly acts on the SAT inputted from a road surface to a rack shaft, so that control of following target SAT can be performed with good responsiveness.

Further, according to the invention, it can be constructed by only using a simple model of an SAT change rate without using a complicated yaw rate standard model and by controlling the SAT change rate, damping can be applied to SAT to adjust damping of a yaw rate of a vehicle.

BRIEF DESCRIPTION OF THE DRAWINGS

Fig. 1 is a block configuration diagram showing one example of an embodiment of the invention;
Fig. 2 is a diagram describing SAT;
Fig. 3 is a diagram describing estimation of SAT;
Fig. 4 is a diagram describing estimation of SAT;
Fig. 5 is a block diagram showing a relation among a standard SAT detection part, an SAT estimation part and a correction part;
Fig. 6 is a block configuration diagram showing one example of Fig. 5;
Fig. 7 is a flowchart showing an action example of the invention;
Fig. 8 is a block configuration diagram showing another example of an embodiment of the invention;
Fig. 9 is a block diagram showing a detailed configuration of a standard SAT change rate detection part and a correction part;
Fig. 10 is a diagram showing a configuration example of a general electric power steering apparatus; and
Fig. 11 is a block diagram showing one example of a control system of an electric power steering apparatus.

DETAILED DESCRIPTION OF EXEMPLARY EMBODIMENTS OF THE INVENTION EMBODIMENTS

A control apparatus of an electric power steering apparatus according to the invention is constructed so that attention is focused on SAT of a vehicle and assist control is performed so that actual SAT follows a standard SAT value obtained by calculation and thereby, vehicle behavior can be stabilized.

Embodiments of the invention will be described below with reference to the drawings.

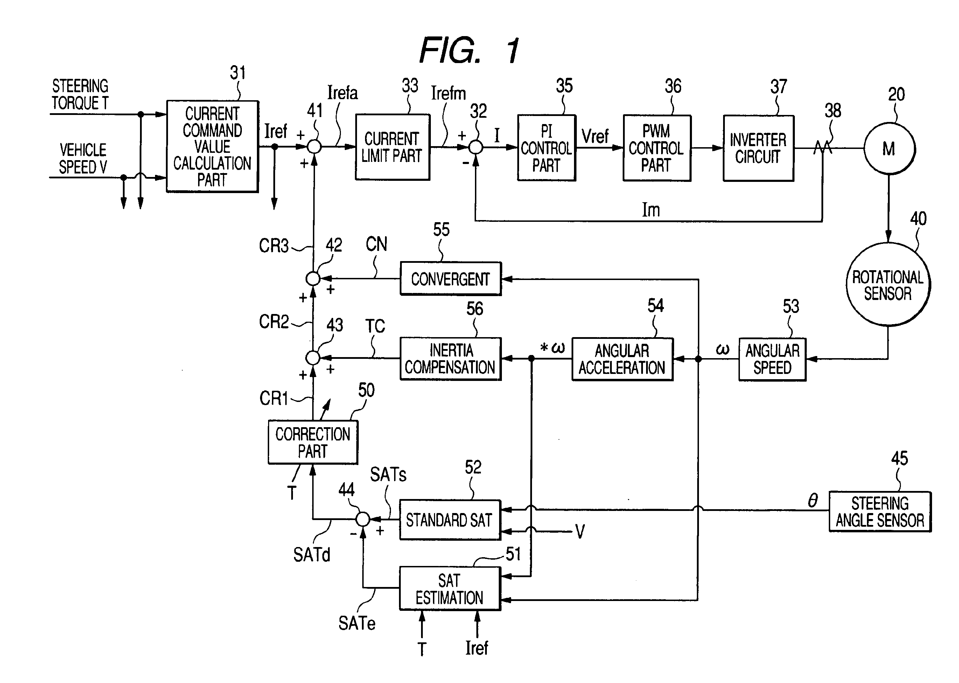

Fig. 1 shows one embodiment of the invention with the embodiment associated with Fig. 11, and steering torque T from a torque sensor is inputted to a current command value calculation part 31 and also is inputted to a correction part 50 and an SAT estimation part 51. Also, a vehicle speed V from a vehicle speed sensor or a CAN (Controller Area Network) is inputted to the current command value calculation part 31 and also is inputted to a standard SAT detection part 52. A current command value Iref calculated by the current command value calculation part 31 is inputted to the SAT estimation part 51 and also is added to a correction signal CR3 by an addition part 41 and a current command value Irefa obtained is inputted to a current limit part 33.

A rotational sensor 40 such as an encoder is attached to a motor 20 for generating assist steering force, and a rotational signal of the rotational sensor 40 is inputted to an angular speed detection part 53 and a motor angular speed ω is detected, and the motor angular speed ω is inputted to an angular acceleration detection part 54, a convergent control part 55 and the SAT estimation part 51. A motor angular acceleration *ω detected by the angular acceleration detection part 54 is inputted to the SAT estimation part 51 and also is inputted to an inertia compensation part 56. Also, a steering angle θ from a steering angle sensor 45 for detecting a steering angle is inputted to the standard SAT detection part 52.

A standard SAT value SATs detected by the standard SAT detection part 52 is added and inputted to a subtraction part 44, and an SAT estimation value SATe estimated by the SAT estimation part 51 is subtracted and inputted to the subtraction part 44. A deviation SATd of the SAT estimation value SATe from the standard SAT value SATs obtained by the subtraction part 44 is inputted to the correction part 50 responsive to the steering torque T, and a correction signal CR1 in response to the deviation SATd is outputted from the correction part 50 and is inputted to an addition part 43. The correction signal CR1 is added to an inertia signal TC from the inertia compensation part 56 by the addition part 43, and an added correction signal CR2 is further added to a convergence signal CN from the convergent control part 55 by an addition part 42, and a correction signal CR3 from the addition part 42 is added to the current command value Iref by the addition part 41.

The convergent control part 55 is constructed so as to apply the brake to a swing action of a steering wheel in order to improve convergence of a yaw of a vehicle, and the inertia compensation part 56 is constructed so as to assist the amount corresponding to force generated by inertia of the motor 20 and prevent deterioration of responsiveness of control or inertia feeling.

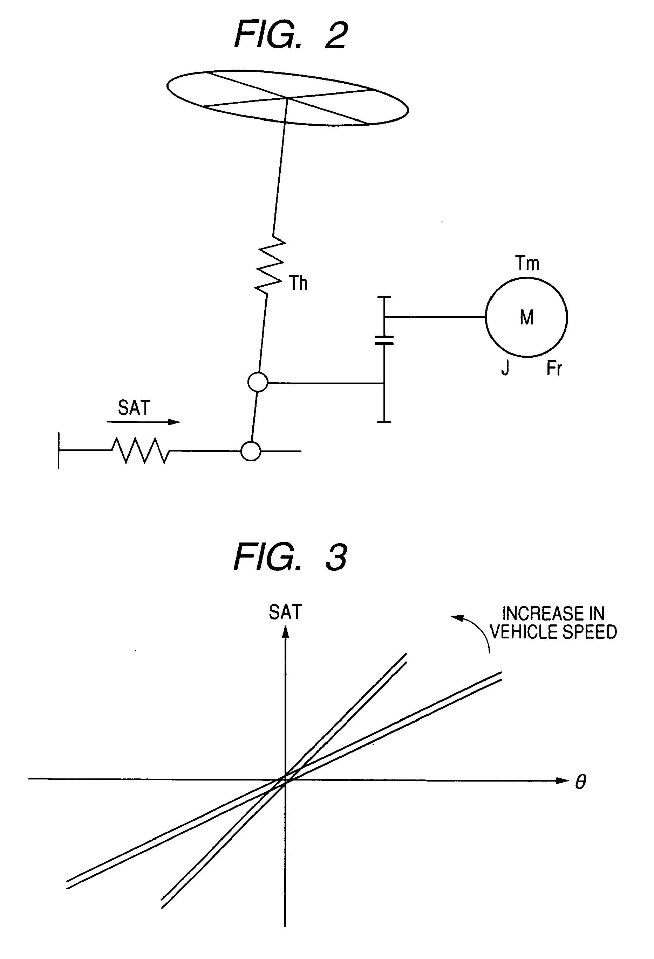

Referring here to a situation of torque generated from a road surface to steering by being shown in Fig. 2, a driver steers and thereby steering torque Th is generated and a motor M generates assist torque Tm according to its steering torque Th. As a result of that, wheels are steered and SAT is generated as reaction force. Also in that case, torque resulting in resistance to steering of the steering wheel is generated by friction (static friction) Fr and inertia J of the motor M. In the case of considering balance between these forces, a motion equation as shown in the following equation (1) is obtained. In addition, ω is a motor angular speed and *ω is a motor angular acceleration.

$$J \bullet *\omega + Fr \bullet sign(\omega) + SAT = Tm + Th \quad ...(1)$$

When a Laplace transform of the equation (1) is performed using zero as an initial value and the equation (1) is solved for SAT, the following equation (2) is obtained.

$$SAT(s) = Tm(s) + Th(s) - J \bullet *\omega(s) + Fr \bullet sign(\omega(s)) \quad ...(2)$$

From the equation (2), the steering torque T, the current command value Iref, the motor angular speed $\omega$ and the motor angular acceleration $*\omega$ are inputted to the SAT estimation part 51. The SAT estimation value SATe estimated by the SAT estimation part 51 is subtracted and inputted to the subtraction part 44.

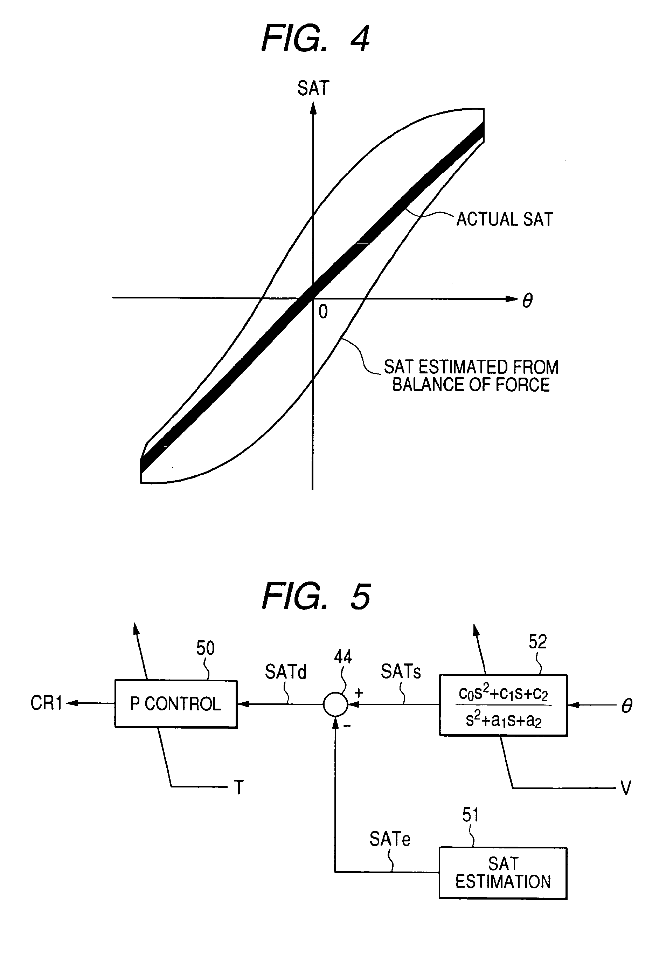

Also, SAT increases with an increase in a vehicle speed V while increasing with an increase in a steering angle $\theta$ as shown in Fig. 3, so that the SAT can be estimated based on the steering angle $\theta$ and the vehicle speed V. When the steering angle $\theta$ and the vehicle speed V are small, the SAT estimated from balance of force has hysteresis as shown by a thin line of Fig. 4. When a width of this hysteresis becomes a problem in performing SAT damping control of the invention, it is desirable to estimate the SAT based on the steering angle $\theta$ and the vehicle speed V. Since actual SAT becomes a function of the steering angle $\theta$ and the vehicle speed V, the estimated SAT may be corrected.

Then, the standard SAT value SATs is calculated by a model of the following equation (3) using the vehicle speed V as a parameter based on the steering angle $\theta$ by the standard SAT detection part 52. However, c0, c1, c2, a1 and a2 are constants, and s is a Laplace operator.

$$SATs = \theta \bullet (c0 \bullet s2 + c1 \bullet s + c2) / (s2 + a1 \bullet s + a2) \quad ...(3)$$

The standard SAT value SATs calculated by the standard SAT detection part 52 is inputted to the subtraction part 44, and the deviation SATd from the SAT estimation value SATe is obtained. The deviation SATd is inputted to the correction part 50, and a correction in response to the steering torque T is made.

Fig. 5 shows a relation among the standard SAT detection part 52, the SAT estimation part 51 and the correction part 50, and the standard SAT detection part 52 is responsive to the vehicle speed V, and the correction part 50 is responsive to the steering torque T and is P (proportional) control.

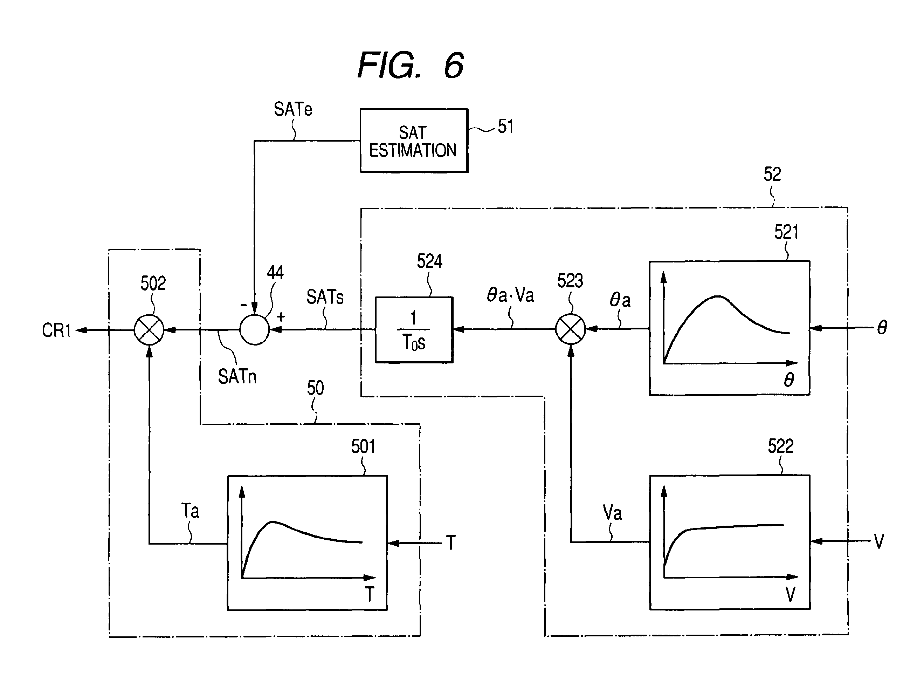

Referring to a detailed configuration example of Fig. 5 by being shown in Fig. 6, a model of the standard SAT detection part 52 is constructed of a gain characteristic part 521 for obtaining a steering angle $\theta$a of characteristics of gradually increasing and gradually decreasing after a predetermined value by inputting a steering angle $\theta$, a gain characteristic part 522 for obtaining a vehicle speed Va of characteristics of gradually increasing at a low scaling factor by inputting a vehicle speed V, a multiplication part 523 for multiplying the steering angle $\theta$a and the vehicle speed Va, and an integral part 524 for integrating $\theta$a times Va from the multiplication part 523 by a time constant T0. The gain characteristic part 521 becomes a model of an SAT change rate with respect to the steering angle $\theta$. A standard SAT value SATs is outputted from the integral part 524. Also, the correction part 50 is constructed of a gain characteristic part 501 for obtaining steering torque Ta of characteristics of gradually increasing and gradually decreasing after a predetermined value by inputting steering torque T, and a multiplication part 502 for multiplying the steering torque Ta by a deviation SATd from the subtraction part 44, and a correction signal CR1 is outputted from the multiplication part 502.

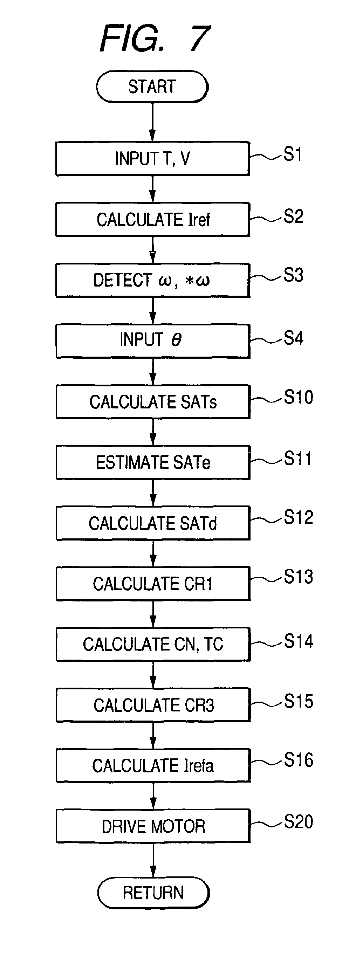

An action example of the invention in such a configuration will be described with reference to a flowchart of Fig. 7.

First, steering torque T and a vehicle speed V are inputted (step S1) and the current command value calculation part 31 calculates a current command value Iref (step S2) . Next, based on a rotational signal of the rotational sensor 40, the angular speed detection part 53 detects a motor angular speed $\omega$ and the angular acceleration detection part 54 detects a motor angular acceleration $*\omega$ (step S3) and a steering angle $\theta$ is inputted from the steering angle sensor 45 (step S4) The order of input of the steering angle $\theta$ and detection of the motor angular speed $\omega$ and the motor angular acceleration $*\omega$ may be reverse.

The standard SAT detection part 52 calculates a standard SAT value SATs based on the steering angle $\theta$ and the vehicle speed (step S10), and the SAT estimation part 51 estimates an SAT estimation value SATe based on the steering torque T, the current command value Iref, the motor angular speed $\omega$ and the motor angular acceleration $*\omega$ (step S11), and the subtraction part 44 calculates a deviation SATd of the SAT estimation value SATe from the standard SAT value SATs (step S12) . The deviation SATd is inputted to the correction part 50, and the correction part 50 calculates a correction signal CR1 by proportional characteristics (step S13). In addition, the order of estimation of the SAT estimation value SATe and calculation of the standard SAT value SATs may be reverse.

On the other hand, the convergent control part 55 calculates a convergence signal CN based on the motor angular speed ω, and the inertia compensation part 56 calculates an inertia signal TC based on the motor angular acceleration *ω (step S14) , and the convergence signal CN is added and inputted to the addition part 42 and the inertia signal TC is added and inputted to the addition part 43, respectively and is added to the correction signal CR1 and a correction signal CR3 is calculated (step S15) . Then, the correction signal CR3 is added to the current command value Iref by the addition part 41 and a current command value Irefa is calculated (step S16) and the motor 20 is driven based on this current command value Irefa (step S20) .

As described above, in the control apparatus of the invention, a deviation of an SAT estimation value from a standard SAT value is calculated and a correction value in which the deviation is multiplied by a gain is calculated and is added to a current command value and a motor is driven. The correction value added to the current command value directly acts on SAT inputted from a road surface to a rack shaft, so that control of following target SAT can be performed with good responsiveness.

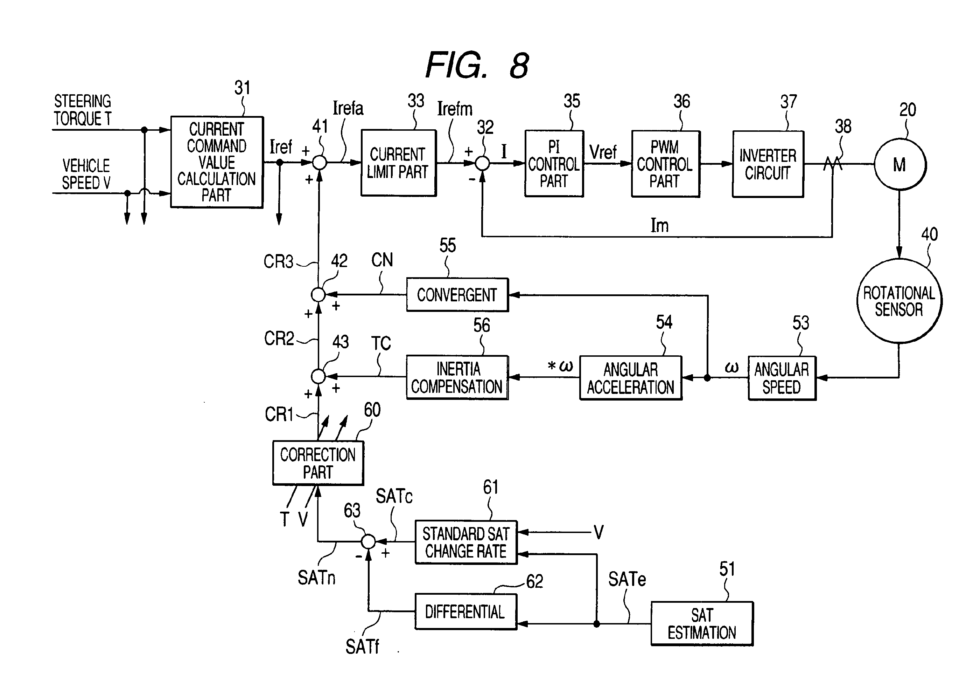

Next, another embodiment of the invention will be described by being shown in Fig. 8. Fig. 8 corresponds to Fig. 1, and description is omitted by assigning the same numerals to the same parts.

In the embodiment of Fig. 8, a standard SAT change rate detection part 61 for detecting a standard SAT change rate SATc, a differential part 62 for differentiating an SAT estimation value SATe estimated by an SAT estimation part 51, a subtraction part 63 for obtaining a deviation of a differentiated SAT estimation value SATf from the standard SAT change rate SATc and a correction part 60 for correcting the deviation SATn obtained by the subtraction part 63 in response to a vehicle speed V and steering torque T are disposed. The SAT estimation value SATe is inputted to the standard SAT change rate detection part 61, and the standard SAT change rate detection part 61 detects the standard SAT change rate SATc based on the SAT estimation value SATe and the vehicle speed V. A desirable change rate in the present SAT value (SATe) and the vehicle speed V is the standard SAT change rate SATc.

When assist control is performed based on the standard SAT change rate SATc thus, a correction value added to a current command value Iref directly acts on a change rate of SAT inputted from a road surface to a rack shaft, so that damping can be applied to the SAT.

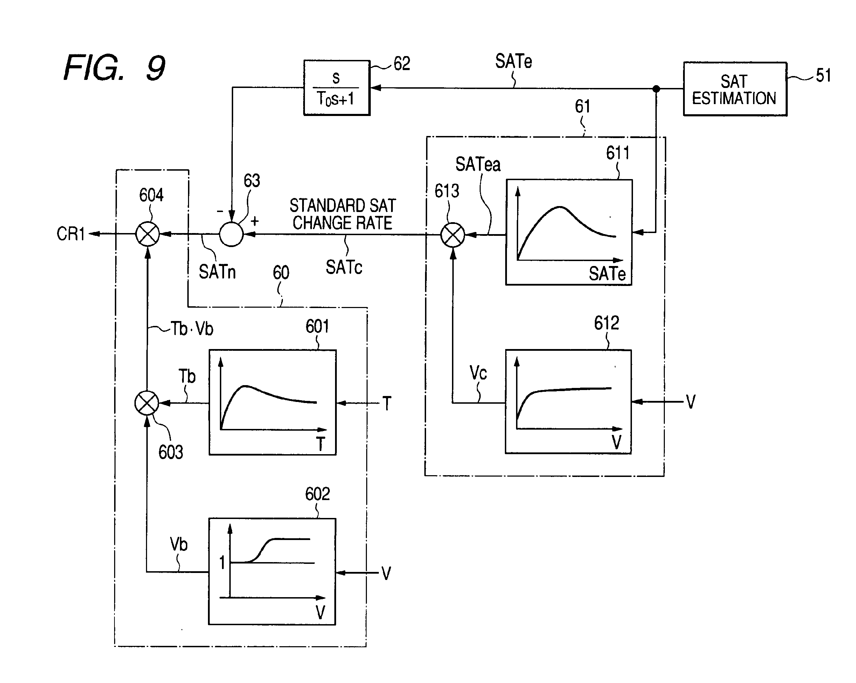

A detailed configuration of the standard SAT change rate detection part 61, the differential part 62 and the correction part 60 is shown in Fig. 9. That is, a model of the standard SAT change rate detection part 61 is constructed of a gain characteristic part 611 for obtaining an SAT estimation value SATea of characteristics of gradually increasing and gradually decreasing after a predetermined value by inputting an SAT estimation value SATe, a gain characteristic part 612 for obtaining a vehicle speed Vc of characteristics of gradually increasing at a low scaling factor by inputting a vehicle speed V, and a multiplication part 613 for multiplying the SAT estimation value SATea and the vehicle speed Vc. The gain characteristic part 611 becomes a model of an SAT change rate with respect to the SAT estimation value SATe. The differential part 62 becomes a transfer function "s/(T0•s+1)". Also, the correction part 60 is constructed of a gain characteristic part 601 for obtaining steering torque Tb of characteristics of gradually increasing and gradually decreasing after a predetermined value by inputting steering torque T, a gain characteristic part 602 for obtaining a vehicle speed Vb of characteristics of gradually increasing at a gain of 1 or more by inputting a vehicle speed V, a multiplication part 603 for multiplying the steering torque Tb and the vehicle speed Vb, and a multiplication part 604 for multiplying a difference SATn by Tb times Vb from the multiplication part 603.

According to the embodiment thus, it can be constructed by only using a simple model of an SAT change rate with respect to complexity of a yaw rate standard model. Also, when SAT is estimated based on a steering angle and a vehicle speed, a steering wheel return speed or steering wheel return characteristics can be adjusted by feedback of an SAT estimation value.

The invention can be applied to a rack assist type electric power steering apparatus as well as column type and pinion type electric power steering apparatus. Also, the SAT estimation part for estimating and feeding back the SAT has been described above, but the SAT may be directly measured by a sensor.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

**1.** A control apparatus of an electric power steering apparatus, which calculates a current command value of a motor for applying steering assist force to a steering mechanism based on steering torque and a vehicle speed, and controls the motor based on the current command value, comprising:

an SAT detection part that detects or estimates a Self Aligning Torque (SAT) detection value;
a standard SAT calculation part that calculates a standard SAT value based on a steering angle and the vehicle speed; and
a correction part that calculates a correction amount based on the SAT detection value and the standard SAT value and corrects the current command value.

2.  The control apparatus of the electric power steering apparatus as set forth in claim 1, wherein the SAT detection part estimates the SAT detection value based on the steering torque, the current command value, a motor rotational speed and a rotational angular speed.

3.  The control apparatus of the electric power steering apparatus as set forth in claim 1, wherein the standard SAT calculation part has a model of an SAT change rate with respect to a steering angle.

4.  The control apparatus of the electric power steering apparatus as set forth in claim 1, wherein a deviation of the SAT detection value from the standard SAT value is calculated and the deviation is multiplied by a gain in response to the steering torque so as to calculate the correction amount.

5.  A control apparatus of an electric power steering apparatus which calculates a current command value of a motor for applying steering assist force to a steering mechanism based on steering torque and a vehicle speed, and controls the motor based on the current command value, comprising:

    an SAT detection part that detects or estimates an SAT detection value;
    a standard SAT change rate detection part that detects a standard SAT change rate based on the SAT detection value and the vehicle speed; and
    a correction part that calculates a correction amount based on a differential value of the SAT detection value and the standard SAT change rate and correcting the current command value.

6.  The control apparatus of the electric power steering apparatus as set forth in claim 5, wherein the SAT detection part estimates the SAT detection value based on a steering angle and the vehicle speed.

7.  The control apparatus of the electric power steering apparatus as set forth in claim 5, wherein the standard SAT calculation part has a model of an SAT change rate with respect to a steering angle.

8.  The control apparatus of the electric power steering apparatus as set forth in claim 5, wherein a deviation of the differential value from the standard SAT change rate is calculated and the deviation is multiplied by a gain in response to the steering torque so as to calculates the correction amount.

9.  The control apparatus of the electric power steering apparatus as set forth in claim 5, wherein the correction part is responsive to the vehicle speed and the steering torque.

FIG. 1

EP 1 860 018 A2

## FIG. 2

## FIG. 3

# FIG. 4

# FIG. 5

FIG. 6

# FIG. 7

START

INPUT T, V — S1

CALCULATE Iref — S2

DETECT $\omega$, $*\omega$ — S3

INPUT $\theta$ — S4

CALCULATE SATs — S10

ESTIMATE SATe — S11

CALCULATE SATd — S12

CALCULATE CR1 — S13

CALCULATE CN, TC — S14

CALCULATE CR3 — S15

CALCULATE Irefa — S16

DRIVE MOTOR — S20

RETURN

# FIG. 8

EP 1 860 018 A2

STEERING TORQUE T

VEHICLE SPEED V

31 — CURRENT COMMAND VALUE CALCULATION PART

Iref

41

Irefa

33 — CURRENT LIMIT PART

Irefm

32

I

35 — PI CONTROL PART

Vref

36 — PWM CONTROL PART

37 — INVERTER CIRCUIT

38

20 — M

Im

40 — ROTATIONAL SENSOR

CR3

42

CN

55 — CONVERGENT

CR2

43

TC

56 — INERTIA COMPENSATION

*ω

54 — ANGULAR ACCELERATION

ω

53 — ANGULAR SPEED

CR1

60 — CORRECTION PART

T V

63

SATn

SATc

61 — STANDARD SAT CHANGE RATE

V

62 — DIFFERENTIAL

SATf

SATe

51 — SAT ESTIMATION

*FIG. 9*

51 — SAT ESTIMATION

611 — SATe
612 — V
613 — SATea
61
Vc

62 — $\dfrac{s}{T_0 s + 1}$

SATe

63 — + / − — SATn
60
STANDARD SAT CHANGE RATE — SATc

601 — T
602 — V
603
604 — Tb·Vb
Tb
Vb

CR1

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000095132 A

- JP 2000118423 A